**Europäisches Patentamt**

**European Patent Office**

**Office européen des brevets**

(19)

(11)  **EP 1 437 667 A1**

(12)                    **EUROPEAN PATENT APPLICATION**

(43) Date of publication:
     **14.07.2004 Bulletin 2004/29**

(51) Int Cl.⁷: **G06F 17/60**, H04Q 7/32

(21) Application number: **02293179.4**

(22) Date of filing: **20.12.2002**

| | |
|---|---|
| (84) Designated Contracting States:<br>**AT BE BG CH CY CZ DE DK EE ES FI FR GB GR<br>IE IT LI LU MC NL PT SE SI SK TR**<br>Designated Extension States:<br>**AL LT LV MK RO**<br><br>(71) Applicant: **Motorola Inc.**<br>**Schaumburg, IL 60196 (US)**<br><br>(72) Inventors:<br>• **Grandblaise, David**<br>  **75006 Paris (FR)**<br>• **Bourse, Didier**<br>  **91120 Palaiseau (FR)** | • **Elicegui, Lucas**<br>  **92140 Clamart (FR)**<br>• **Fontenelle, Sandrine**<br>  **75015 Paris (FR)**<br>• **Motte, Nicolas**<br>  **91120 Palaiseau (FR)**<br>• **Pintenet, Remy**<br>  **78000 Versailles (FR)**<br><br>(74) Representative: **Wharmby, Martin Angus**<br>  **Motorola Centre de Recherche,**<br>  **Parc Technologique de St. Aubin,**<br>  **Route de L'Orme au Merisier,**<br>  **Immeuble Columbia**<br>  **91190 Gif-sur-Yvette (FR)** |

(54)    **Method of managing spectrum and communication unit and communication system therefor**

(57)    A method of managing spectrum (200, 300) comprises the steps of considering (110, 210) a plurality of radio access technologies; and considering (215) available communication resources to support the plurality of radio access technologies. The method also comprises the steps of generating (235) a plurality of spectral building blocks (320) based on two or more of the plurality of radio access technologies; and managing spectrum by dynamically managing the plurality of spectral building blocks. A communication system and a communication unit supporting aspects of spectrum management have also been described.

In this manner, by provision of spectral building blocks, for example based on radio access technologies per carrier frequencies, spectrum management is dynamically performed with consideration of both the economic and the technical aspects of spectrum allocation.

FIG. 4

**EP 1 437 667 A1**

**Description**

**Field of the Invention**

This invention relates to an efficient mechanism for managing spectrum. The invention is applicable to, but not limited to, generating and dynamically allocating blocks of spectrum to different Operators.

**Background of the Invention**

In the field of this invention, it is known that radio frequency resource (i.e. spectrum) is both scarce and expensive. Hence, in designing and operating wireless communication systems, for example, cellular-based systems, spectrum efficiency must be optimised. This is critical, particularly in the current wireless communication climate, where several Operators compete for customers within the same frequency band.

Today, many Radio Access Technologies (RATs) are available through different wireless communication systems. In this regard, RATs are differentiated by a number of communication parameters. For example, methods of communicating information simultaneously exist, where communication resources in a communication network are shared by a number of users. Such methods are termed multiple access techniques. A number of multiple access techniques exist, such as frequency division multiple access (FDMA), time division multiple access (TDMA) and code division multiple access (CDMA).

Furthermore, the information is typically transmitted in a suitable modulation format, for recovery at the receiver. Many modulation schemes exist, which support different data rates in the communication link. In addition, different RATs may operate on different frequency bands, operate with different power levels, have differing spectral properties or requirements, etc.

A range of wireless communication systems that operate different RATs, in this context, include cellular (second generation (2G), third generation (3G), etc.), digital video broadcast (DVB), wireless local area networks (WLAN) such as Hiperlan/2, IEEE 802.11, etc., as well as public area networks (PANs) such as Bluetooth ™. Each of these communication systems has been designed to provide specific services and applications, using a predetermined radio access technology. These RATs operate in identified frequency bands i.e. they are allocated a fixed portion of spectrum.

Having a fixed spectrum allocation presents the advantage that subscriber communication units know the operating frequency of each RAT. However, the nature of the communication traffic is time and space variant. Introducing flexibility in the spectrum allocation will allow spectrum to be allocated in a manner that better matches the Operators' and users' needs in a geographical area at a particular instant of time. This maximizes the spectrum use.

In current communication systems, a number of known spectrum allocation techniques exist.

One known spectrum allocation technique, is to allocate a fixed amount of spectrum in a particular communication system to each Operator. The Operators are committed to fulfil certain objectives in terms of the amount of communication traffic they service as well as the coverage area that they support. If the Operators do not fulfil these objectives, the recourse is that their spectrum may be re-allocated to other Operators in need of such spectrum.

However, this approach has the disadvantage that the determination of whether the objectives are met, and fixedly re-allocating spectrum if the objectives are not met, typically takes many months to implement. Furthermore, the technique is generally accepted as too inflexible to meet its desired purpose. Notwithstanding this, it is also clearly unsuitable if the spectrum usage for particular Operators occurs in peaks and troughs. A more dynamic way of reallocating spectrum according to traffic needs is therefore required.

In this regard, an alternative technique has been proposed in US 5,907,812 that focuses on utilisation of unused spectrum. US 5,907,812 attempts to optimise spectrum utilisation by providing for flexible coexistence of several radio systems on a common radio frequency band. This involves searching for frequencies that satisfy the interference requirements (in terms of influences from neighbouring Operator frequencies) and the service requirements (in terms of bandwidths required) of the communication system.

This scheme is similar to a "Dynamic Carrier (Spectrum) Assignment (Allocation)" between co-existent and collaborative Operators. In such a scheme, all frequencies are "pooled" and are made available to all Operators or users, provided that the Operators or users comply with pre-defined spectrum allocation criteria. Often the unused spectrum is 'borrowed' from spectrum already pre-allocated, for example, for military and/or emergency services use. Concepts related to spectrum pooling have been described in documents published by the University of Karlsruhe. A first example is: F. Capar, I. Martoyo, T. Weiss, and F. Jondral "Comparison of Bandwidth Utilization for Controlled and Uncontrolled Channel Assignment in a Spectrum Pooling System", VTC Spring 2002, Birmingham Alabama. A second example is: F. Capar, F. Jondral "Resource Allocation in a Spectrum Pooling System for Packet Radio Networks Using OFDM/TDMA" IST Summit 2002 Thessaloniki Greece.

Other pooling schemes are known. However, all known spectrum-pooling techniques suffer from the same drawback, in that the spectrum allocation procedure is very complex. Furthermore, it is difficult, if not impossible, for Operators to assure a continuity of service if they are unaware of when they have to release the 'borrowed' spectrum.

There are other studies, for example projects that are done essentially within the IST context (European research projects funded by the European Union.) such as TRUST D4.4, SCOUT, Drive D0.9, Overdrive, etc., which are focusing on the concept of Spectrum Sharing. Such concepts are described in IST-1999-12070 TRUST, D4.4, "Final Report on Spectrum Sharing Techniques and Recommendations for Future Research", December 2001, and IST DRiVE Project Report D0.9: "Dynamic Spectrum Allocation Algorithm including results of DSA performance simulations", 12/2001, Authors: Jörg Huschke, Paul Leaves.

The concept of Spectrum Sharing requires agreements between Operators as well as the development of a fair scheme enabling dynamic spectrum sharing. The major problem is to find an agreement that is acceptable to all Operators, for example agreement on how much spectrum they will exchange, how much time they are allowed to use the spectrum, the cost associated with using the spectrum, etc. A further area of difficulty results from the differing needs of Operators at different times of the day, i.e. their needs are not the same in terms of services, applications and the supporting technologies. The provision of fixed frequency bands limits the viability of this sharing scheme.

Recent developments in the area of Software Defined Radio (SDR) have provided the opportunity for a more dynamic use of frequency spectrum. In this regard, dynamically re-programmed (SDR) radios are, in theory, able to achieve the full interoperability between all such radio access technologies. However, as yet, such technologies have not been developed sufficiently to be launched viably in the market place as products.

Thus, there exists a need in the field of the present invention to provide, at least, an improved method of managing, allocating and using spectrum wherein the abovementioned disadvantages with spectrum management may be alleviated.

**Statement of Invention**

In accordance with the present invention there is provided a method of managing spectrum, a method of using spectrum and a wireless communication unit and wireless communication system therefor are described in the appended Claims.

**Brief Description of the Drawings**

Exemplary embodiments of the present invention will now be described, with reference to the accompanying drawings, in which:

FIG. 1 illustrates a concept of generating base elements from a number of RATs, in accordance with a preferred embodiment of the invention;

FIG. 2 is a flowchart illustrating the factors affecting the generation of the spectral building blocks, in accordance with a preferred embodiment of the invention;

FIG. 3 illustrates a concept of generating spectral building blocks, in accordance with a preferred embodiment of the invention;

FIG. 4 illustrates a market-based concept of applying and using spectral building blocks, in accordance with a preferred embodiment of the invention;

FIG. 5 illustrates an envisaged evolution of a spectral building block's worth over time;

FIG. 6 is a diagram illustrating the concept of different Operators purchasing and operating different spectral building blocks, in accordance with a preferred embodiment of the invention;

FIG. 7 is a diagram illustrating the evolutionary concept of the various Operator spectral building blocks utilising available spectrum, in accordance with a preferred embodiment of the invention;

FIG. 8 illustrates an arrangement for optimising the use of an available portion of spectrum using the spectral building blocks, in accordance with a preferred embodiment of the invention;

FIG. 9 is a flowchart illustrating the factors affecting utilisation of the spectral building blocks, in accordance with a preferred embodiment of the invention; and

FIG. 10 shows a block diagram of a wireless communication unit, preferably a software defined radio unit, adapted to support the various inventive concepts of a preferred embodiment of the present invention.

**Description of Preferred Embodiments**

In summary, the inventive concepts described herein consider jointly both the economical and the technical aspects of spectrum management. The proposed mechanism for spectrum management introduces a new concept for enabling some flexibility in the spectrum allocation, i.e. a RAT is no longer attached to a particular frequency band. The mechanism described herein follows the motto: "Use Spectrum only when and where it is needed!" Using this new concept, only the needed radio resources will be deployed in the most appropriate frequency bands. In this manner, the spectrum will be uniformly used. Furthermore, the spectrum efficiency will be higher and other new concepts, such as Spectrum Sharing between operators, Spectrum Trading, etc. can be applied.

The inventors of the present invention envisage a-priori spectrum sharing. The inventors believe that future spectrum allocation, for example in the case of the universal mobile telecommunication system (UMTS), may be allocated differently by the Regulator at the outset of system roll-out, to when the technology is more mature. Indeed, today the allocation performed by the Regulator consists solely of attributing fixed frequencies to an Operator allowing the Operator to deploy a Radio Access Technology in a given frequency band. In such a case, an Operator may initially acquire, and therefore pay for, say, a handful of UMTS carrier frequencies. However, in subsequent months/years the Operator may have very different spectral requirements. Hence, in such a scenario, it is envisaged that the Operator will need a much more flexible method of acquiring spectrum, than returning to the Regulator and requesting a greater or fewer number of fixed frequencies.

The inventive concepts herein described propose a new spectrum allocation scheme, which is more flexible than current spectrum allocation schemes.

The need of spectrum is time and space variant, depending upon a number of different parameters, such as: the environment (rural, urban), the mobility of users, the time of the day (e.g. month, year) and the requested applications, etc. Flexibility in the way the spectrum is allocated, taking into account all these parameters, leads to the following benefits:

(i) A benefit for operators who will adapt their spectrum to their traffic and to the users' needs (e.g. improved spectrum efficiency),
(ii) A benefit for users (e.g. by adapting the provided quality of service (QoS) to match their needs), and
(iii) A benefit for the Regulator, who optimises the use of the overall spectrum. This approach also contributes to more flexibility in coverage engineering management.

Many proposals for introducing such flexibility have been unsuccessful, as a lot of inter-dependent factors need to be considered. Therefore, before allowing a totally flexible spectrum allocation (i.e. Operators deciding to associate a frequency to a RAT at any given time and place), the present invention proposes a hybrid scheme that reduces the complexity in terms of spectrum co-existence. Notably, this hybrid scheme does not consider each RAT individually, with regard to current spectrum allocation approaches, but considers a set of RATs.

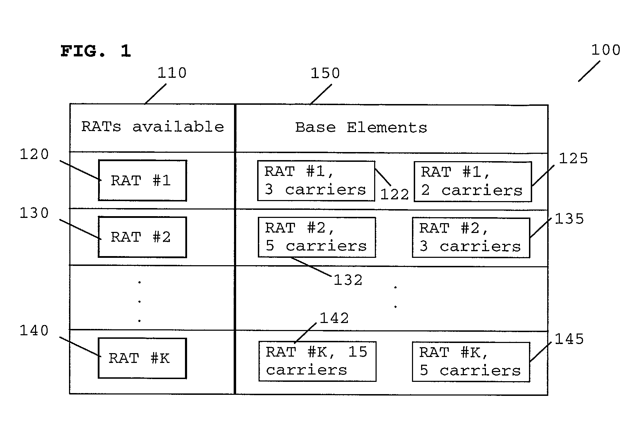

In this regard, the proposed mechanism considers the context of a global radio. As such, the mechanism proposes "RAT packages", hereinafter termed "building blocks", which contain optionally several RATs inside each package. The motivation is to have a finite set of "building blocks", constructed of base elements, as described later with respect to FIG. 1, in order to ease dynamic interference management. It is envisaged that the different building block sets are constructed by the Regulator and proposed to entities, such as Operators, who want to use and/or rent spectrum.

Referring now to FIG. 1, a concept 100 of generating base elements from a number of RATs is illustrated, in accordance with a preferred embodiment of the present invention. It is envisaged that the Regulator, having knowledge of current technologies, will preferably define 'base elements' 150. A base element is defined as a RAT, which is assigned a certain number of carrier frequencies. FIG. 1 describes different possibilities for base elements. For example, a first RAT 120 may be utilised to provide a first base element 122 that applies three carrier frequencies to that RAT 120. The first RAT may also be utilised to provide a second base element 125 that applies two carrier frequencies to the same RAT 120.

In a similar manner, it is envisaged that any number of RATs 130, 140, may be utilised to provide any number of respective base elements 132, 135, 142, 145 for the particular RATs 130, 140. Thus, a number of base element options can be generated.

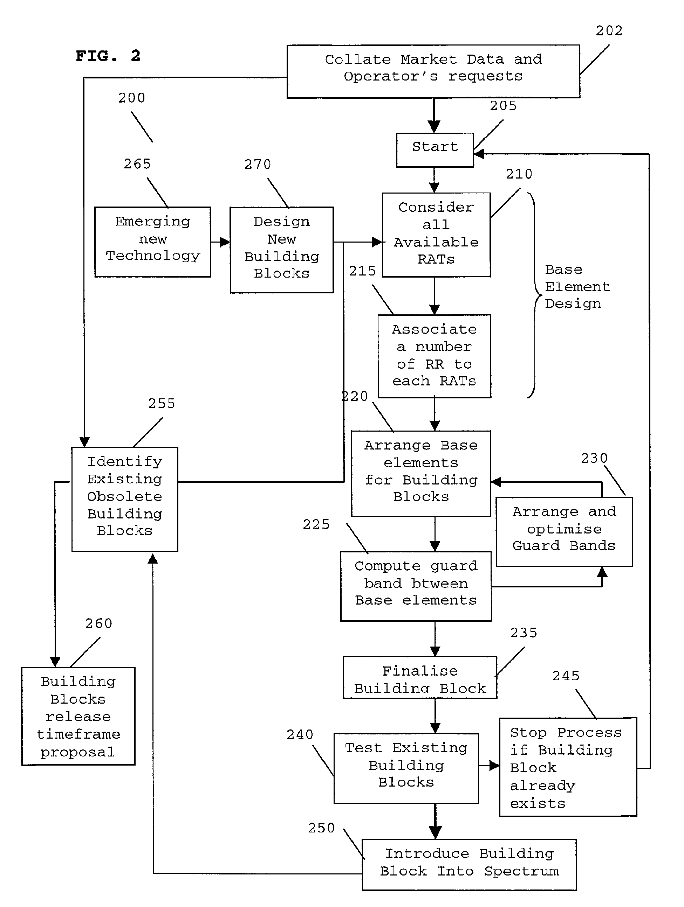

Referring now to FIG. 2, a flowchart 200 illustrates the generation of the spectral building blocks including the factors and considerations to be made by the Regulator that affect the content of the spectral building blocks, in accordance with a preferred embodiment of the invention. Using the different types of base elements 130, 140, the task for the Regulator is to generate adequate motifs in order to construct appropriate spectral 'building blocks'.

A spectral building block is a combination of substantially contiguous different base elements in the spectrum domain. In order to construct a spectral building block, the Regulator has to decide the type of spectral building block, which better matches the Operators' needs. The Regulator also needs to consider that the applications supported by the respective RATs are not the same for all Operators. The Regulator has to also consider the different types of applications, market forces, the traffic requirements of each application depending on the day or time of day, spectral occupancy, and also the different options for communicating and/or routing the information, as shown in step 202. With these considerations in mind, the Regulator is able to start the process of designing different types of building blocks that support different situations, i.e. communication traffic, Operators' needs, etc., in step 205.

Once the Regulator has acquired the aforementioned requisite information, the Regulator determines the best combination(s) of RATs, in step 210, and the optimum radio resources (e.g. number of carriers) per RAT, in step 215, for the respective Operators. The Regulator is then able to generate/arrange a number of building blocks from base elements (BEs), in step 220.

A building block is fully characterized by:

$$\text{Brick A} = \begin{cases} N, \text{ with } N \in \{1, ..., N_{max}\}, \\[2mm] BE_1, BE_2, ..., BE_N, \\[2mm] \Delta F_{BE\,i,\,BE\,j}, \text{ where } \forall\,(i, j) \in \{1, ..., N\}_i^2 \end{cases}$$

where:

(i) N is the number of Base Elements available in the building block, $N \in \{1, ..., N_{max}\}$, $N_{max}$ being the maximum number of Base Elements per building block defined by the Regulator,

(ii) $BE_i$ identifies a Base Element, which corresponds to a RAT with a certain number of carriers, and

(iii) $\Delta F_{BE\,i,\,BE\,j}$ is the guard band between two adjacent carriers of BEi and BEj, $\forall(i, j) \in \{1, ..., N\}^2$. If i = j, this is the guard band for two adjacent carriers of the same BE. In both cases, the guard band depends on the chosen carrier frequencies for the BE being considered. In the preferred embodiment of the present invention, the Regulator computes optimum intra and inter Guard band for the building blocks, as shown in step 225. It is envisaged that the optimisation of the building bricks, dependent upon the respective guard bands, may be an iterative process, as indicated by step 230.

Once a building block has been constructed in step 235, the Regulator ensures its auto-viability by performing one or more tests on the building block, as shown in step 240. The tests may include ascertaining whether adequate guard bands are provided for between two technologies and between two carriers of a same RAT for every frontier between two carriers (whether or not for the same RAT) inside the building block. In this manner, the spectral coexistence of base elements within each building block is guaranteed.

As the Regulator knows explicitly the content and the operating frequencies of each building block, the Regulator is also able to determine the intra guard band between building blocks. The intra guard band is the spectral bandwidth that is needed between building blocks, to avoid interference between the RATs contained therein. The amount of guard band depends on the type of building blocks that are placed in close spectral vicinity of each other. The aforementioned problem of inflexible spectrum co-existence is substantially resolved by utilising this 'building block' principle.

Notably, the preferred embodiment of the present invention considers the provision of guard bands in two distinct scenarios. First, the impact of intra guard bands is considered in the construction of a building block a-priori. This guard band selection takes into account the spectral distribution of the respective RATs. In this manner, co-existence of base elements within a building block can be achieved. Secondly, when constructing a 'wall' of building blocks, the amount of spectrum required between building blocks, i.e. an inter guard band, is considered. The inter guard band takes into account the Spectral performance of the respective building blocks.

Clearly, the spectral inter guard band is also dependent upon the amount of intra guard band allocated at the extremities of the respective building blocks. Thus, in an enhanced embodiment of the present invention, it is envisaged that, with careful spectral planning, it may be possible to provide for a mechanism that only considers intra guard bands.

In this manner, the order of building blocks within a wall can be configured to ensure the spectrally more-efficient building blocks/RATs are automatically placed on the outer extremities of the building block. Thus, the use of additional inter guard bands, in some cases, may not be needed.

Once the testing of the building blocks has been completed, the Regulator is able to introduce the building blocks into the available spectrum, as shown in step 250. Clearly, if a suitable building block exists, in step 245, the process in generating a new building block is redundant.

Preferably, the Regulator continues to monitor the performance and usage of the building blocks, once the building blocks go 'live' on the communication system(s). For example, by monitoring the performance, a Regulator is in a better position to react to changing Operator and user needs. An example scenario is when new technologies emerge, in step 265, new Base elements, and thereafter spectral building blocks, should be designed to better match the evolving market needs in terms of spectrum, as shown in step 270. This could be performed by changing the number of carriers for Base elements, or by the introduction of a new RAT. Then, using these new Base elements, the Regulator is able to design new building blocks, in the manner described above.

The Regulator, in offering a number of building blocks of a particular type to Operators, has to determine the most opportune time to allow the building blocks to enter the marketplace, as shown in step 260. In fact, it is envisaged that an over-subscribed number of building blocks may be produced, as some building blocks will possibly be unused at any particular point in time.

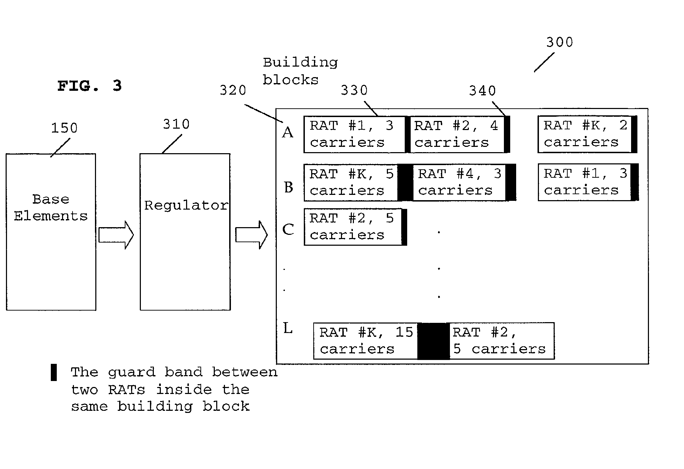

Referring now to FIG. 3 an alternative view of the concept of generating spectral building blocks of FIG. 1 is illustrated. Here, the Regulator 310, designs and uses a number of Base elements 150, in order to generate a number of building blocks 320, for example 'A' to 'L'. Each respective building block comprises a number of Base elements 330, located adjacent to one another. Intra guard bands 340 are shown, separating the base elements 330 within the building block 320.

Thus, a wireless communication system, for example a universal mobile telecommunication system is able to deploy spectrum between a plurality of spectrum users within the wireless communication system by dynamically utilising a plurality of spectral building blocks. The spectral building blocks are based on two or more radio access technologies and preferably include guard bands 340.

FIG. 2 and FIG. 3 illustrate the mechanism to construct Building blocks. These building blocks constitute the 'entity' that is to be used, allocated, purchased, exchanged, etc. with regard to the proposed spectrum management process. After defining this spectral building block entity, the preferred mechanism of trading the spectral building blocks is now described.

In order to enter the spectrum market, it is envisaged that the interested parties/companies may have to pay an entrance fee. It is likely that the entrance fee may not be a set fee, and should not be compared to the concept of a licence fee. In practice, an Operator paying a fee of US$xx, for example to the Regulator or an alternative body that is acting as a controller of the spectrum transactions, receives in exchange for the fee, say, 'T' *Credits*. The Operator will then use his/her 'T' *Credits* to purchase one or more building blocks. Indeed, in the context of the present invention, these Credits represent the currency that enables the spectral transactions between the interested parties.

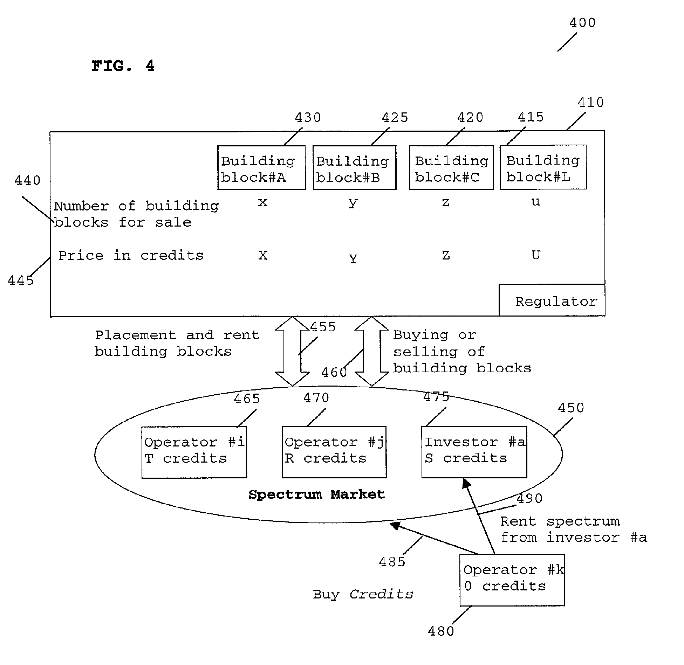

Referring now to FIG. 4, a market-based concept of applying and using spectral building blocks is illustrated, in accordance with a preferred embodiment of the invention.

The Regulator 410, or the authorized authority, places on the market the building blocks 415, 420, 425, 430 that it has designed. The purchase of the respective building blocks 415, 420, 425, 430 is likely to incur different costs 445, in Credits. Furthermore, it is envisaged that these costs 445 may vary within a particular type of building block, dependent upon the number of building blocks purchased 440, i.e. a quantity discount may be offered.

It is envisaged that the price of one specific building block may depend on:

(i) The different Base elements used in the building block, and
(ii) The maturity of the RAT, which is used in the Base element(s).

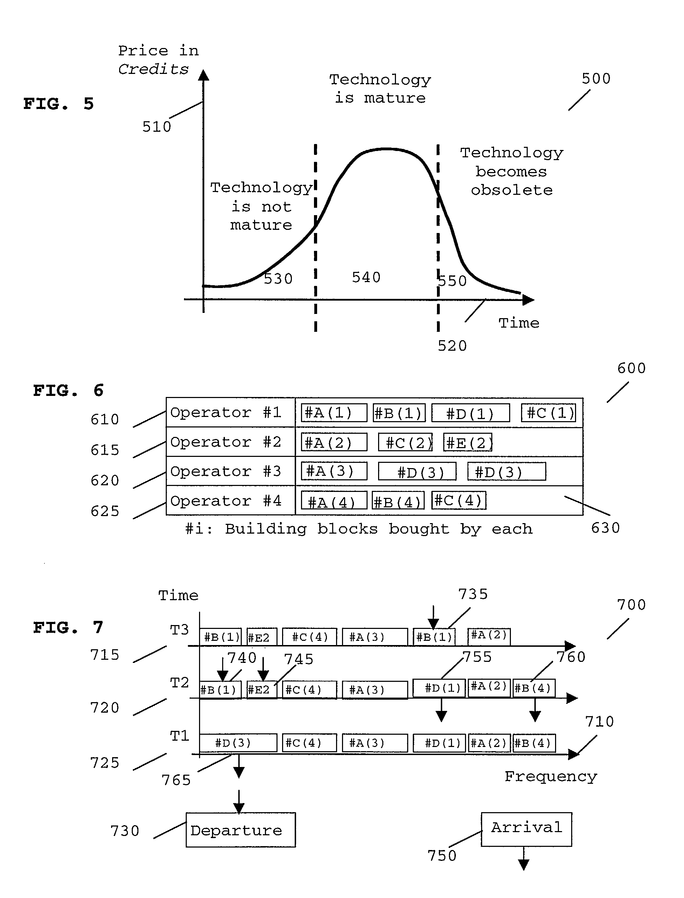

Referring now to FIG. 5, an envisaged evolution of a spectral building block's worth, over time and dependent upon its constituent RAT(s), is illustrated. The graph 500 in FIG. 5 illustrates a price in *Credits* 510 versus time 520. For example, if a RAT is an emerging technology 530, an Operator could face some technical problems in bringing that RAT to the marketplace. Hence, the Operator may be taking some commercial risks. In this case, it is envisaged that the price in credits may well be relatively low. However, if a RAT is sufficiently mature 540, its performance is acknowledged and appreciated by a customer base. Thus, the price may be higher. Furthermore, if a RAT is progressively going out of the market (e.g. emerging new RATs are more effective) 550, the price may well decrease.

Referring back to FIG. 4, the Regulator 410 will update the price, dependent upon certain events. These events could be the emergence of a new technology, the fact that a particular building block is more popular than other building blocks, etc.

An entity within the 'spectrum market' 450, who is purchasing the right to use 460 or rent 455 one or several building blocks is either an Operator 465, 470 or a trader/investor 475. An Operator is likely to use the purchased building blocks within their communication system; whereas a trader 475 will likely rent 490 or trade/sell 485 these purchased building blocks to other Operators 480.

At any time, these entities may decide to sell, for whatever reason, one or several building blocks. It is envisaged that an Operator may want to purchase and use other types of building blocks, which better matches their particular needs in serving their customers.

Alternatively, an Operator may wish to sell building blocks that focus on technologies that are becoming obsolete.

It is also envisaged that an Operator may also speculate with purchasing and selling of particular building blocks. In this case, the Regulator or the authorized entity has two choices. First, the Operator can offer these building blocks to the spectrum market 450, so that they are available for a potential buyer. Alternatively, the Operator may decide to re-use building blocks of obsolete technologies. In this case, the Regulator may decide to construct new building blocks with emerging new RATs. These new building blocks will then be placed on the market. Thus, in this context, the range of building blocks proposed by the Regulator 410 would be regularly updated, in order to better match a customer's (i.e. a spectrum owner's) needs.

Advantageously, the flexibility offered by the aforementioned process would significantly enhance spectrum use.

A building block exchange mechanism is also envisaged.
In this regard, if a spectral building block fails to adequately match a spectrum owner's needs, the spectrum owner may exchange building blocks with other spectrum owners, in order to maintain some value in the *Credits* that they had purchased. It is envisaged that the intervention of the Regulator would preferably be limited to insuring that all spectrum trades had been made according to pre-established rules.

In the preferred embodiment of the present invention, the regulation entity (Regulator or other Authority) is primarily responsible for the optimisation of the building blocks and their placement within the available spectrum. The reason being that the regulation entity is the only entity that has an overall vision of the occupied spectrum at any given time. Thus, the regulation entity is best able to determine if the type of building block that an Operator wants to use is compatible with all possible neighbouring building blocks.

Referring now to FIG. 6, a diagram 600 illustrates the concept of different Operators purchasing and operating different spectral building blocks, in accordance with a preferred embodiment of the invention. In this regard, four Operators 610, 615, 620, 625 are providing a wireless communication service in a particular geographical coverage area. Each of the four Operators 610, 615, 620, 625 have purchased a number of different types of building blocks 630.

FIG. 7 illustrates the preferred evolutionary mechanism of the various Operator spectral building blocks utilising the regulation entity's available spectrum, in accordance with a preferred embodiment of the invention. In particular, FIG. 7 illustrates the removal 730 of some building blocks, together with the arrival (potential replacement) 750 of new building blocks. At a particular time t=T1, Operator #3 decides to relinquish the spectrum occupied by building block #D 765. When receiving a request from Operator #1 and Operator #2 to introduce their respective building blocks #B(1) 740 and #E(2) 745, the Regulator is able to determine the necessary guard bands between their respective different building blocks. In this case, the Regulator determines that the requested building blocks 740, 745 from Operator #1 and Operator #2 can be used in a contiguous manner to replace Operator #3's building block #D 765. Preferably, the Regulator then implements such a change.

In a similar manner, the regulation entity is able to provide spectral re-use to an individual Operator. In this case, Operator #1 wishes to replace its building block #D 755, with a less-bandwidth hungry building block #B 735. This transition can be supported by the regulation entity, for example as depicted in the transition from time t=T2 720 to time t=T3 715. Also, the regulation entity is able to offer unused spectrum, e.g. by supporting Operator #4's request to introduce its building block #B 760.

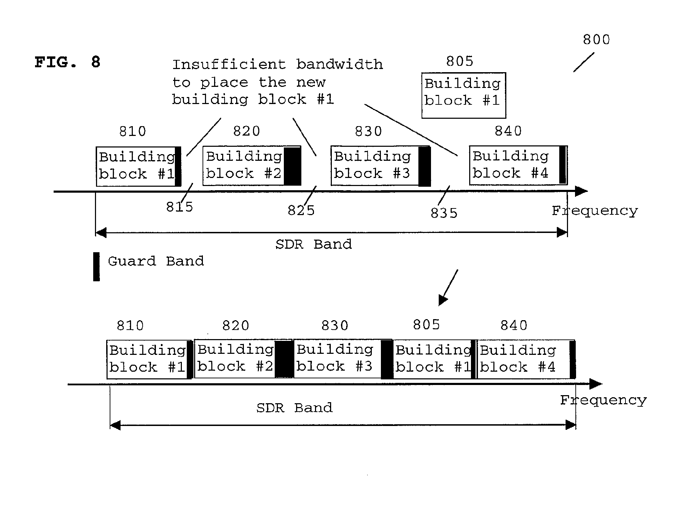

Several processes for optimising the spectrum use can be implemented. For example, if the Regulator detects gaps in the spectrum usage, which are too small to accept a building block, the Regulator may request that one or more Operators or, in turn, one or more spectrum users, translate their building blocks to other operating frequencies, in order to create a larger spectral gap that is sufficient to accept another building block. In particular, with the introduction of a software defined radio (SDR), where substantially all of the operating characteristics of the radio, including frequency of operation, are controlled by software, the movement between operating frequencies of SDR users is a trivial matter. Such a mechanism is illustrated in FIG. 8.

In this case, there is insufficient available spectrum, within gaps 815, 825, 835 to locate a building block #1 805. Existing Operators are encouraged to translate their building blocks 810, 820, 830, 840 in the frequency domain, say, by the Regulator offering preferential rental charges. Thus, by translating the operating frequencies of the Operator's building blocks, a spectral space is created that has a sufficiently large bandwidth to accommodate building block #1 805.

The pattern of a number of building blocks is important, since all building blocks do not occupy the same bandwidth. Moreover, depending upon the RAT(s) used within the building block, it is envisaged that the rent is unlikely to be the same for each building block. This is for similar reasons as those described above for the building block pricing strategy.

When an Operator owns the right to use one or several building blocks, the Operator preferably abides by the following process before the Operator actually uses the building block. First, the Operator preferably decides which type of building block they want to place in the spectrum. Then, the Operator contacts the Regulator or the authorized entity to determine where they can place the selected building block. The regulation entity may propose one or more spectral locations. Dependent upon commercial considerations, such as rental charge, the Operator selects the best spectral option for that building block, and informs the Regulator accordingly.

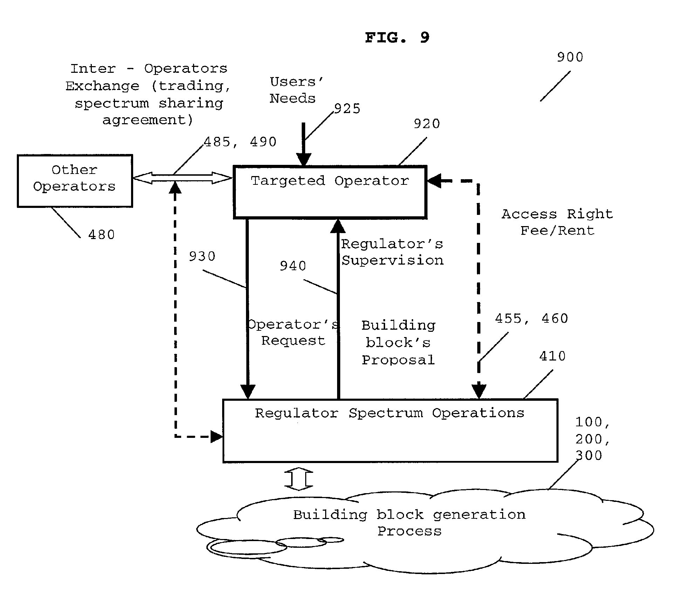

Referring now to FIG. 9, a flowchart 900 illustrates the overall process of the present invention, including the factors affecting utilisation of the spectral building blocks, in accordance with a preferred embodiment of the invention. A Regulator 410 performs a number of spectrum-related operations, including instigating and controlling a building block generation process 100, 200, 300, as described above with regard to FIG. 1, FIG. 2 and FIG. 3.

The building block generation process 100, 200, 300 preferably uses input from the end-users 925 as well as the targeted Operators 920. Furthermore, the building block generation process 100, 200, 300 and/or the regulator's allocation of the spectral building blocks is responsive to one or more Operator requests 930. As previously indicated, it is envisaged that the Regulator 410 may continuously supervise 940 the use of the spectrum for a large number of reasons.

Thus, a method of identifying a spectrum user's spectral requirements and allocating two or more spectral building blocks enables the communication system's spectrum to be used. Advantageously, the two or more spectral building blocks may be updating dynamically, in accordance with the inventive concepts described herein.

Preferably, when an Operator occupies a portion of spectrum with his building block(s), the Operator is required to pay a rental charge 455, 460 to the Regulator 410. This rental charge is preferably dependent upon the occupancy time of the building block, the operating frequencies and the type of building blocks. Advantageously, it is envisaged that such a mechanism opens up the spectrum market place to the smaller Operators 480, as they are able to acquire small amounts of spectrum on a piece-wise basis.

The occupancy time is an important parameter for computing the rental charge. It is envisaged that the occupancy time may vary substantially, from a matter of a few minutes or hours, dependent upon the type of traffic supported at a particular time of day, up to a weekly, monthly or even yearly basis. It is also expected that the occupancy time may not be the same across the whole spectrum and may depend upon one or more of the following:

    (i) The type of spectral building blocks,
    (ii) The competition,
    (iii) The RAT maturity,
    (iv) The RAT characteristics, etc.

As described above, the flexible spectrum trading mechanism benefits from an ability of the Regulator 410 to dynamically (re)-design building blocks. Such spectral building blocks are subsequently offered to Operators 920 within the spectrum marketplace. Alternatively, or in addition, one or more Operators 920 may be allowed to dynamically (re)-design their previously purchased building blocks, so long as they inform the Regulator 410 of their actions.

It is envisaged that the replacement of building blocks could be triggered by a number of different events/ parameters depending on the Operators' needs, the emergence of a new technology, the success or lack of success of a particular building block, etc.

For example, let us consider an event-triggered building block generation mechanism for, say, a Football World Cup scenario. With such an event, a Regulator may decide to design a specific building block for this event, since a lot of users would request the re-transmission of matches or highlights (such as goals) from a particular match. It could also be possible to (re)-design specific building blocks for a given event to respond to the users' needs in the area of this event, where the event could be a forum, a conference, a sporting competition, etc. The building blocks used for this specific event could be dissolved immediately after the event, with new building blocks designed to respond to subsequent market needs.

Alternatively, it is envisaged that a Market led trigger may be used to instigate the process of generating spectral building blocks. For example, when a new technology becomes available, it is possible that some of the existing building blocks may become obsolete. In such a case, a timeframe for their release would be proposed to Operators. Thus, the replacement of building blocks is not fixed in time, but is led by an offer and demand principle, thereby allowing a smooth transition of spectral usage. In this case, a trade-off between the potential lifetime of a building block and the cost of its creation has to be considered.

Advantageously, if a particular Operator has no traffic for some reason, the application of a rental scheme, requiring the Operator to pay rent for the unused spectrum, will lead the Operator to relinquish the unused spectrum.

This, in turn, allows another Operator to provide service to its customers, thereby providing a more efficient use of the spectrum due to the inherent encouragement for Operators to relinquish unused spectrum.

The choice of operating frequencies is also an important factor, since a RAT's coverage capability is dependent on the location of particular carrier frequencies within the allocated frequency band(s). A particular RAT is likely to provide a more efficient service at a premium operating frequency. Thus, if an Operator obtains use of these frequencies the Operator may be required to pay more 'rent' than an Operator using other frequencies that have been identified as 'poorer' frequencies for the same RAT. For instance, it is envisaged that some Operators may purposefully select to occupy these poorer frequencies, where the rent is lower, so that they can offer lower subscription fees in order to attract new users. A yet further option would be for an Operator to deliberately move to 'low-quality' frequencies for a given RAT during the night, when the amount of traffic is low, in order to save money.

A distributed architecture to fulfil these needs is envisaged. Indeed, Regulators, Operators and System Architecture manufacturers and integrators are currently developing their own backbone network across large territories (including whole regions or countries), to enable them to perform quality measurements and check that transmitted signals are respecting defined constraints. In this regard, a wireless communication system, for example a universal mobile telecommunication system, is preferably adapted to support the dynamic re-allocation of one or more spectral building blocks to enable a wireless communication unit, for example a SDR unit, to modify one or more of its operating frequencies. The spectrum is dynamically allocated within the wireless communication system as a set of spectral building blocks based on two or more radio access technologies.

In accordance with an enhanced 'distributed database' embodiment of the present invention, the wireless communication system comprises a number of databases that are located throughout the wireless communication system. In this regard, the number of databases is/are dynamically updated with data relating to a usage and/or a performance of a number of spectral building blocks used in managing spectrum within the communication system.

In this manner, a Regulator and/or Operator has/have a clear picture of the spectrum occupancy within a given geographical area. It would then be possible to advise the spectrum user to position a particular spectral building block at a particular frequency band, taking into account the user's rental budget constraints.

Also, it is within the contemplation of the invention that several Operators may decide to share the use of one building block, for example if the Operators did not have the funds to purchase the building block outright or the Operator's anticipated customer base was not sufficient to fully utilise the building block. In this case, agreements between respective Operators may be used in order to give priority to one Operator when placing the building block in the spectrum. The priority would preferably be based on the business agreement regarding the purchase of the building block. The Operator having the highest priority may be the one who accepts to pay the extra rental costs related to the placing of the building block. Alternatively, the Operator having the highest priority may be the one who pays for a major share of the building block.

The priority scheme is more especially required if for instance, two operators jointly buy a single spectral building block, for example containing 3G and WLAN carriers. In this case, depending upon where the building block would be located (i.e. at 2GHz or 5GHz), one Operator would be able to rely on a better system performance (e.g. coverage capability). Priority, in this sense, would mean that the highest priority Operator would be preferentially satisfied i.e. the spectral building block would be allocated to optimised frequencies for this Operator.

It is anticipated that future wireless communication systems may employ multiple RATs over multiple frequency bands. In this regard, the inventive concepts of the present invention in using building blocks and/or sets of building blocks provide a significant benefit with regard to flexibility and, in particular, being able to dynamically react to customer/ user needs.

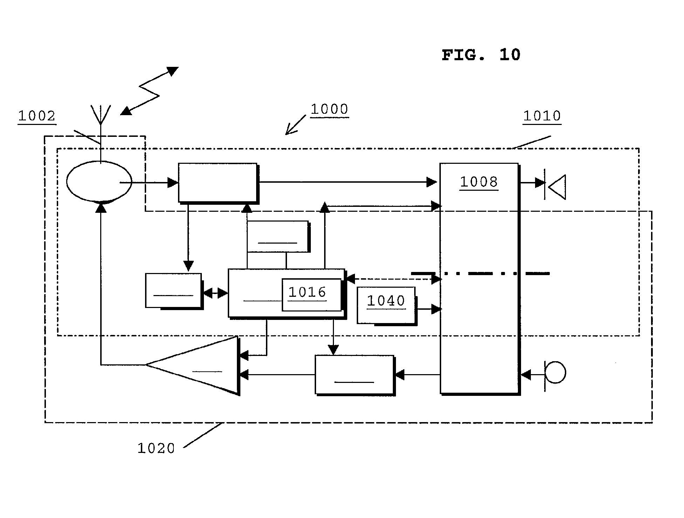

Turning now to FIG. 10, there is shown a block diagram of a wireless communication unit, hereinafter referred to as a mobile station (MS) 1000 adapted to support the inventive concepts of the preferred embodiments of the present invention. The MS 1000 is preferably a software defined radio that is able to program its operating frequencies in response to instructions received from the communication infrastructure, for example the operation and management control of a universal mobile telecommunication system. The MS 1000 contains an antenna 1002 preferably coupled to a duplex filter, antenna switch 1004 that provides isolation between a receiver and a transmitter chain within the MS 1000.

As known in the art, the receiver chain typically includes receiver front-end circuitry 1006 (effectively providing reception, filtering and intermediate or baseband frequency conversion). The front-end circuit 1006 is serially coupled to a signal processing function 1008. An output from the signal processing function is provided to a suitable output device 1010, such as a speaker.

The signal processing function 1008 is operably coupled to a memory unit 1016, via link 1036, and a timer 118 via a controller 1014. In particular, the operation of the signal processing function 1008 has been adapted to support the inventive concepts of the preferred embodiments of the present invention. In particular, the signal processing function 1008, which is operably coupled to frequency generation circuitry (not shown) has been adapted to respond to instructions to modify an operating frequency employed by the MS 1000. The instructions are made in response to a dynamic re-allocation of one or more spectral building blocks.

For completeness, the receiver chain also typically includes received signal strength indicator (RSSI) circuitry 1012 (shown coupled to the receiver front-end 1006, although the RSSI circuitry 1012 could be located elsewhere within the receiver chain). The RSSI circuitry is coupled to a controller 1014 for maintaining overall subscriber unit control. The controller 1014 is also coupled to the receiver front-end circuitry 1006 and the signal processing function 1008 (generally realised by a DSP). The controller 1014 may therefore receive bit error rate (BER) or frame error rate (FER) data from recovered information. The controller 1014 is coupled to the memory device 116 for storing operating regimes, such as decoding/encoding functions and the like. A timer 1018 is typically coupled to the controller 1014 to control the timing of operations (transmission or reception of time-dependent signals) within the MS 1000.

As regards the transmit chain, this essentially includes an input device 1020, such as a microphone transducer coupled in to a transmitter/modulation circuit 1022. Thereafter, any transmit signal is passed through a power amplifier 1024 to be radiated from the antenna 1002. The transmitter/modulation circuitry 1022 and the power amplifier 1024 are operationally responsive to the controller, with an output from the power amplifier coupled to the duplex filter or circulator 1004. The transmitter/modulation circuitry 1022 and receiver front-end circuitry 1006 comprise frequency up-conversion and frequency down-conversion functions (not shown).

Of course, the various components within the MS 1000 can be arranged in any suitable functional topology able to utilise the inventive concepts of the present invention. Furthermore, the various components within the MS 1000 can be realised in discrete or integrated component form, with an ultimate structure therefore being merely an arbitrary selection.

Thus, in summary, this invention proposes an innovative technical solution for spectrum management, including a contention mechanism for trading economical aspects for fair spectrum resources. This solution provides much more than the alternative schemes of traditional spectrum sharing and pooling techniques. Indeed, the present invention complements the spectrum-sharing technique in the frequency domain, in that there is no longer a requirement for fixed frequency carriers. Furthermore, the present invention supports a more reliable communication Quality of Service (QoS), in contrast to the Spectrum Pooling scheme. An improved QoS is achieved through better service management in terms of service continuity.

A yet further benefit of the proposed mechanism is clearly the flexibility offered to the Operators, regulators and users. A flexible traffic, QoS and coverage management mechanism is provided, which reduces the complexity associated with spectrum co-existence in using predefined spectral building block entities.

It is also within the contemplation of the invention that the present invention is not limited to the redistribution of frequencies, but may include any communication resource, such as time slots, time frames, codes etc. Furthermore, it is envisaged that the present invention can be applied in a configuration context in which subscriber units as well as infrastructure devices, can be re-configured in terms of radio interface and carrier frequency, for example due to SDR capabilities.

The aforementioned inventive concepts have been described with regard to managing spectrum by dynamically managing a plurality of spectral building blocks. The spectral building blocks are based on two or more radio access technologies. The context of the present invention has been described with a broadest sense of the term "managing". For example, the dynamic management of the spectral building blocks comprises, but is not limited to, allocation of spectral building blocks, use of spectral building blocks, trading in spectral building blocks, re-formatting a content of spectral building blocks, replacing spectral building blocks, supplementing spectral building blocks, moving spectral building blocks designing spectral building blocks, etc.

It will be understood that the methods of managing spectrum, as described above, provide at least the following advantages:

(i) The provision of predefined spectral building block entities reduces the complexity associated with spectrum co-existence;

(ii) Spectrum management is performed with consideration of both the economical and the technical aspects of spectrum allocation.

(iii) The proposed solution for spectrum management includes trading economical aspects for fair spectrum resources contention. This solution is more advantageous than alternative schemes of traditional spectrum sharing and pooling techniques.

(iv) The proposed solution complements a spectrum-sharing technique in the frequency domain (i.e. no more fixed frequency carrier is required);

(v) The proposed solution provides a more rigorous QoS provision, contrary to the Spectrum Pooling scheme (i. e. better service management in term of service continuity).

(vi) A flexible traffic, QoS and coverage management is provided;

(vii) The solution provides flexible spectrum sharing and increase in spectrum efficiency to the Operators, Regulators and users; and

(viii) The cost of the use of the shared frequency (spectrum) can be shared between the Operators.

Whilst specific, and preferred, implementations of the present invention are described above, it is clear that one skilled in the art could readily apply variations and modifications of such inventive concepts.

Thus, a method of managing spectrum, and a wireless communication system facilitating the spectrum management, have been provided, wherein the aforementioned disadvantages associated with the prior art mechanisms have been substantially alleviated.

**Claims**

1.  A method of managing spectrum (200, 300), the method comprising the steps of:

    considering (110, 210) a plurality of radio access technologies; and
    considering (215) available communication resources to support said radio access technologies; the method **characterised by** the steps of:

    generating (235) a plurality of spectral building blocks (320) based on two or more of said plurality of radio access technologies; and
    managing spectrum by dynamically managing said plurality of spectral building blocks.

2.  The method of managing spectrum (200, 300) according to Claim 1, wherein at least one spectral building block (320) from said plurality of spectral building blocks comprises a set of base elements (330).

3.  The method of managing spectrum (200, 300) according to Claim 2, wherein said set of base elements (330, 340) comprises at least one radio access technology utilising a number of communication resources.

4.  The method of managing spectrum (200, 300) according to Claim 3, wherein a number of communication resources comprises a number of carrier frequencies.

5.  The method of managing spectrum according to any preceding Claim, wherein said step of managing comprises dynamically allocating (250) one or more spectral building blocks (320) within a frequency spectrum.

6.  The method of managing spectrum (200, 300) according to Claim 5, wherein said step of dynamically allocating (250) comprises a step of moving a spectral location of one or more spectral building blocks to create a spectral opening for another spectral building block (805).

7.  The method of managing spectrum (200, 300) according to Claim 6, wherein said step of dynamically allocating (250) comprises a step of replacing (735, 755) one or more spectral building blocks.

8.  The method of managing spectrum (200, 300) according to any preceding Claim, wherein said step of managing comprises a step of trading, for example renting or selling, one or more spectral building blocks.

9.  The method of managing spectrum (200, 300) according to Claim 8, wherein said step of trading (455, 460, 485, 490) comprises a step of charging for said one or more spectral building blocks.

10. The method of managing spectrum (200, 300) according to Claim 9, wherein said step of charging comprises charging an amount that is based on one or more of the following: the one or more base elements contained within the spectral building block, a maturity of a radio access technology, a location of a spectral building block within the available spectrum.

11. The method of managing spectrum (200, 300) according to any preceding Claim, wherein said step of managing comprises a step of using said one or more spectral building blocks.

12. The method of managing spectrum (200, 300) according to Claim 11, wherein said step of using one or more spectral building blocks comprises charging for said use, wherein said charge is based on one or more of the following: the one or more base elements contained within the spectral building block, maturity of a radio access technology, location of a spectral building block within the spectrum, occupancy time, time of day.

**13.** The method of managing spectrum (200, 300) according to any preceding Claim, the method further **characterised by** the step of evolving a design of one or more building blocks based on a radio access technology use or an emergence of a new radio access technology.

**14.** The method of managing spectrum (200, 300) according to any preceding Claim, the method further **characterised by** the step of providing one or more guard bands (340) between successive base elements in a spectral building block and/or between successive spectral building blocks.

**15.** The method of managing spectrum (200, 300) according to any preceding Claim, wherein an entity managing spectrum is one of: a Regulator (310, 410), an Operator (465, 470) or a spectrum user.

**16.** A wireless communication system, adapted to facilitate the method of any of the preceding Claims.

**17.** A wireless communication system, for example a universal mobile telecommunication system wireless communication system, **characterised in that** deployment of spectrum between a plurality of spectrum users within the wireless communication system dynamically utilises a plurality of spectral building blocks (320) based on two or more of radio access technologies.

**18.** A method of using spectrum comprising the step of:

identifying a spectrum user's spectral requirements; the method **characterised by** the steps of:

allocating two or more spectral building blocks; and
using and updating dynamically said use of said two or more spectral building blocks.

**19.** A wireless communication unit (1000), for example a software defined radio communication unit, comprising:

a receiver (1010) for receiving data;
a transmitter (1020) for transmitting data;
frequency generation circuitry for frequency converting receive and/or transmit signals; and
a processor (1008), operably coupled to the frequency generation circuitry for controlling a frequency of operation, and operably coupled to the receiver for processing received data, and operably coupled to the transmitter for generating data to be transmit;
the wireless communication unit (1000) **characterised by** said receiver (1010) receiving a message, processed by said processor (1008), instructing said wireless communication unit to modify an operating frequency employed by the wireless communication unit in response to a dynamic re-allocation of one or more spectral building blocks.

**20.** A wireless communication system, for example a universal mobile telecommunication system, adapted to support the dynamic re-allocation of one or more spectral building blocks to enable a wireless communication unit, for example the wireless communication unit (1000) of Claim 19, to modify an operating frequency.

**21.** A wireless communication system, for example a universal mobile telecommunication system, supporting two or more radio access technologies, **characterised in that** spectrum is dynamically allocated within the wireless communication system as a set of spectral building blocks based on said two or more radio access technologies.

**22.** The wireless communication system according to Claim 20 or Claim 21, further **characterised in that** a number of databases are located throughout the wireless communication system such that the number of databases are dynamically updated with data relating to a usage and/or a performance of a number of spectral building blocks used in managing spectrum within the communication system.

**FIG. 1**

100

110    150

| RATs available | Base Elements |
|---|---|
| RAT #1 | RAT #1, 3 carriers    RAT #1, 2 carriers |
| RAT #2 | RAT #2, 5 carriers    RAT #2, 3 carriers |
| . . . | |
| RAT #K | RAT #K, 15 carriers    RAT #K, 5 carriers |

120

130

140

122

132

142

125

135

145

**FIG. 2**

Collate Market Data and Operator's requests — 202

Start — 205

200

265 — Emerging new Technology

270 — Design New Building Blocks

Consider all Available RATs — 210

Base Element Design

215 — Associate a number of RR to each RATs

255 — Identify Existing Obsolete Building Blocks

220 — Arrange Base elements for Building Blocks

230 — Arrange and optimise Guard Bands

225 — Compute guard band btween Base elements

260 — Building Blocks release timeframe proposal

235 — Finalise Building Block

245 — Stop Process if Building Block already exists

240 — Test Existing Building Blocks

250 — Introduce Building Block Into Spectrum

**FIG. 3**

Building
blocks

300

320    330    340

150    310

| | Base Elements | Regulator | A | RAT #1, 3 carriers | RAT #2, 4 carriers | RAT #K, 2 carriers |
|---|---|---|---|---|---|---|

A | RAT #1, 3 carriers | RAT #2, 4 carriers | | RAT #K, 2 carriers

B | RAT #K, 5 carriers | RAT #4, 3 carriers | | RAT #1, 3 carriers

C | RAT #2, 5 carriers

.
.
.

L | RAT #K, 15 carriers | RAT #2, 5 carriers

▌ The guard band between
two RATs inside the
same building block

15

FIG. 4

400

410

430        425        420        415

| Building block#A | Building block#B | Building block#C | Building block#L |
|---|---|---|---|

440

Number of building blocks for sale      x        y        z        u

445

Price in credits      X        Y        Z        U

Regulator

Placement and rent building blocks      455      Buying or selling of building blocks

460

465      470      475      450

| Operator #i T credits | Operator #j R credits | Investor #a S credits |
|---|---|---|

**Spectrum Market**

490

Rent spectrum from investor #a

485

Buy *Credits*

Operator #k 0 credits

480

**FIG. 5**

Price in *Credits*

510

500

Technology is mature

Technology becomes obsolete

Technology is not mature

530     540     550

Time

520

**FIG. 6**

600

| | | | | | |
|---|---|---|---|---|---|
| 610 | Operator #1 | #A(1) | #B(1) | #D(1) | #C(1) |
| 615 | Operator #2 | #A(2) | #C(2) | #E(2) | |
| 620 | Operator #3 | #A(3) | #D(3) | #D(3) | |
| 625 | Operator #4 | #A(4) | #B(4) | #C(4) | |

#i: Building blocks bought by each     630

**FIG. 7**

Time

700

735

T3   #B(1) #E2   #C(4)   #A(3)   #B(1)   #A(2)

715

740   745     755   760

T2   #B(1) #E2   #C(4)   #A(3)   #D(1) #A(2) #B(4)

720

710

T1   #D(3)   #C(4)   #A(3)   #D(1) #A(2) #B(4)

725

765

Frequency

730   Departure

Arrival

750

17

**FIG. 8**

Insufficient bandwidth
to place the new
building block #1

800

805

| Building |
| block #1 |

810

| Building |
| block #1 |

820

| Building |
| block #2 |

830

| Building |
| block #3 |

840

| Building |
| block #4 |

815

825

835

Frequency

SDR Band

■ Guard Band

810

| Building |
| block #1 |

820

| Building |
| block #2 |

830

| Building |
| block #3 |

805

| Building |
| block #1 |

840

| Building |
| block #4 |

Frequency

SDR Band

## FIG. 9

FIG. 10

## PARTIAL EUROPEAN SEARCH REPORT

**European Patent Office**

which under Rule 45 of the European Patent Convention shall be considered, for the purposes of subsequent proceedings, as the European search report

Application Number

EP 02 29 3179

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 198 18 515 A (SIEMENS AG) 4 November 1999 (1999-11-04) * the whole document * --- | 19-22 | G06F17/60 H04Q7/32 |
| X | GB 2 294 844 A (MOTOROLA INC) 8 May 1996 (1996-05-08) * abstract; claims 1-15; figures 1-7 * --- | 19-22 | |
| A | TENNENHOUSE D L ET AL: "THE SPECTRUM WARE APPROACH TO WIRELESS SIGNAL PROCESSING" WIRELESS NETWORKS, ACM, US, vol. 2, no. 1, 1 March 1996 (1996-03-01), pages 1-12, XP000581000 ISSN: 1022-0038 * page 2, left-hand column, line 19 - right-hand column, line 5 * * page 10, right-hand column, line 25 - page 11, left-hand column, line 14 * * abstract * ----- | 19-22 | |

|  |
|---|
| TECHNICAL FIELDS SEARCHED (Int.Cl.7) |
| H04Q |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

19-22

Claims searched incompletely :

Claims not searched :

1-18

Reason for the limitation of the search:

Article 52 (2)(c) EPC - Scheme, rules and method for doing business

| Place of search | Date of completion of the search | Examiner |
|---|---|---|
| THE HAGUE | 25 February 2003 | Coppieters, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**ANNEX TO THE EUROPEAN SEARCH REPORT
ON EUROPEAN PATENT APPLICATION NO.**

EP 02 29 3179

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2003

| Patent document cited in search report | | Publication date | Patent family member(s) | | Publication date |
|---|---|---|---|---|---|
| DE 19818515 | A | 04-11-1999 | DE | 19818515 A1 | 04-11-1999 |
| | | | WO | 9956481 A1 | 04-11-1999 |
| GB 2294844 | A | 08-05-1996 | AU | 700136 B2 | 24-12-1998 |
| | | | AU | 3980095 A | 31-05-1996 |
| | | | CN | 1141111 A ,B | 22-01-1997 |
| | | | DE | 19581443 T0 | 27-02-1997 |
| | | | WO | 9614719 A1 | 17-05-1996 |
| | | | FI | 962789 A | 03-09-1996 |
| | | | JP | 9507986 T | 12-08-1997 |
| | | | RU | 2153237 C2 | 20-07-2000 |
| | | | US | 6223030 B1 | 24-04-2001 |

EPO FORM P0459

For more details about this annex : see Official Journal of the European Patent Office, No. 12/82